# EUROPEAN PATENT SPECIFICATION

(11) **EP 4 103 655 B1**
(45) Date of publication and mention of the grant of the patent: **09.12.2026**
(21) Application number: 21713577.1
(22) Date of filing: 12.02.2021
(51) Int. Cl.: C09J 5/06, B27N 3/00, C09J 189/00, B27N 1/00

(54) **BIO-BASED BINDERS AND METHODS FOR PRODUCING THE SAME**
BIOBASIERTE BINDEMITTEL UND VERFAHREN ZUR HERSTELLUNG DAVON
LIANTS D'ORIGINE BIOLOGIQUE ET LEURS PROCÉDÉS DE PRODUCTION

(30) Priority: 14.02.2020 IT 202000003022
(43) Date of publication of application: 21.12.2022
(73) Proprietor: Collix S.r.l., 50132 Firenze (IT)
(72) Inventor: VENTURINI DEL GRECO, Giovanni, 50121 FIRENZE (IT); VAN VEEN, Arjen Harm, 50137 FIRENZE (IT); ROSSELLI DEL TURCO, Jacopo, 50023 IMPRUNETA (IT)
(74) Representative: Zaccaro, Elisabetta
(86) International application number: PCT/EP2021/053530
(87) International publication number: WO 2021/160846

(56) References cited:
- WO-A2-2015/104565
- US-A1- 2012 214 909
- US-B2- 8 147 968

## Description

### FIELD OF THE INVENTION

The present invention concerns the field of binders suitable for wood panel manufacturing. In particular, the invention regards bio-binder compositions and methods for producing the same. In a further aspect the present invention describes the use of these bio-based binders.

The invention further describes methods for gluing articles and products obtainable by using the bio-binders of the present invention.

### STATE OF THE ART

Over 20 million tons of petrochemically derived substances are consumed by the wood and insulation sectors every year, mainly in the form of binders. In response to Climate Change, manufacturers of composite boards, such as medium density fibreboard (MDF or HDF), oriented strand board (OSB), particleboard (PB) and plywood, are driven to manufacture wood composites with the lowest content possible of fossil-based substances.

In addition to the challenge of manufacturing a composite board with the minimal petrochemically derived substances, the regulative framework concerning volatile organic compounds (VOCs), such as those of formaldehyde and isocyanates, is another challenge to respond to. The presence of VOCs is inherently connected to the manufacturing of composite boards due to nebulizing of petrochemically derived binders onto the wood and to harmful vapours generated from hot-pressing the resinated wood at elevated temperatures, in some cases higher than 200 °C.

The majority of composite board manufacturers utilize binders comprising formaldehyde, a volatile toxic chemical compound, that is known by WHO International Agency for Research on Cancer (IARC) (2010) and the EuCIA (2015) to be a human carcinogenic compromising indoor air quality. To mitigate the adverse effect on indoor air quality the Airborne Toxic Control Measure was effectuated in the US to provide special provisions for manufacturers of wood panels who plan to utilise Ultra-Low-Emitting-Formaldehyde (ULEF) binders or No-Added-Formaldehyde (NAF) binders. ULEF binders can be manufactured by mixing UF with formaldehyde scavengers, scavengers that are primarily petrochemically derived often compromising binding performances of the utilised UF and therefore not allowing for reduced consumption of petrochemically derived substances.

Regarding NAF binders, isocyanates such as pMDI are known to provide excellent adhesion at relatively low dosage onto the fibres compared to other binder systems. However, the uptake of pMDI in wood composite manufacturing is limited due to some inherent disadvantages:
First, pMDI is known to stick to the metal press platens, caul plates or stainless-steel screens that are used in the manufacturing process of wood panels. Consequently, manufacturers of wood panels are concerned about press build-up that can compromise the continuity of their manufacturing processes due to potentially extensive maintenance. To deal with such issue, extensive use of expensive, fossil-based or non-biodegradable releasing agents has been attempted. Second, pMDI is known to have scarce stability once mixed with an aqueous medium, resulting in concerns by wood panel manufacturers in case of temporarily interruptions of production. Third, pMDI does not provide cold tack that is required to avoid mat breakage in the processing line. To avoid such issue, investments to modify the production lines or extensive use of tackifiers are proposed; such options represent a financial obstacle for the adoption of the solution since most proposed tackifiers are derived from further refined fossil- or biological material. Fourth, pMDI is in any case a petrochemically derived compound of which its Global Warming Potential (GWP) is about 2.4 kg CO2 equivalent per kg of pMDI, as described by PlasticsEurope (2012), and thus does not contribute to mitigating climate change. Fifth, the pMDI polymer is not considered as a biodegradable compound. Therefore, to avoid long-term lasting detrimental impact on the environment it is of paramount importance to utilise the bare minimum of pMDI required. Finally, the use of pMDI is known to lead to increased and more volatile wood panel production costs due to the relatively high production cost of pMDI and the limited number of pMDI producers at global level.

To respond to the challenge of manufacturing composites with ever lower quantities of petrochemically derived, non-degradable substances and VOCs emissions, such as those arising from formaldehyde and isocyanate binder systems, the wood composites sector is exploring the up-take of biological material in their manufacturing processes to fully or partially substitute the petrochemically derived substances, not only related to binder systems but also manufacturing additives such as waxes, tackifiers, composite release promoters, moisture-resistance improvement agents, hardening agents, or binder catalysts.

Among the biological material used to partially or fully substitute fossil-based, non-degradable and toxic compounds, protein have been considered because of their remarkable binding properties. Defatted soy meal or soy flour have been at the centre of various attempts, due to their high protein content and relative abundance. Patent US6306997B1 describes a bio-based binder comprising soybean flour and a cross-linking agent. Patent US7736559B2 describes thermosetting adhesive compositions for use in fibreboard, wherein the compositions comprise a blend of a soy defatted meal component and a polymeric quaternary amine cure accelerant agent. Patent WO2001059026 describes the use of copolymer of hydrolyzed soy protein obtained from soy meal having a plurality of methylol groups and at least one co-monomer having a plurality of methylol groups.

However, at industrial level, soy meal or soy flour are typically obtained through physical-chemical refining processes entailing the use of organic solvents and significant amount of energy, to remove lipids and various anti-nutritional compounds that are present in soybeans such as lectin, saponins and protease inhibitors which make soybean inedible.

The process for manufacturing soy flour comprises multiple steps such as drying, tempering, cleaning, classification (optional), cracking, dehulling (optional), conditioning, flaking, solvent extraction, micella distillation, meal desolventizing.

Among the typical organic solvents used in the process, hexane is the most used chemical compound. The process of manufacturing soy flour results in a positive GWP. While soybean has a GWP of about 421 g CO2 eq/kg soybean, refined soy flour has a GWP of about 519 g CO₂ eq/kg soy flour (United Soybean Board, 2016). Furthermore, the traditional lipid extraction process to obtain edible soy meal results in a flour that presents a relatively high viscosity when dispersed in an aqueous medium at the desirable concentration to avoid slowdown in fibreboard production lines. In order to improve the characteristics of soy flour as ingredient for bio-binders, certain modifications of the standard soy flour manufacturing process have been proposed. For instance, it has been found that viscosity of soy flour in water can be reduced through micronizing (US 2006/142433 A1); or increased protein reactivity can be achieved by introducing less aggressive thermal treatments in soy flour manufacturing (US8147968B2). For instance, Prolia^{™} is a commercially available, standardised, high-quality defatted soy flour for the food sector that also turned out to possess superior characteristics for binding purposes due to its relatively low viscosity.

High quality defatted soy flour has been used in various patents and patent applications. Patent EP2576661 describes a method to obtain stable emulsions by mixing defatted plant meals (Prolia^{™}) or isolated protein constituent derived thereof with pMDI for the manufacturing of lignocellulosic fibreboards. The described method puts in evidence that significant additivation is required even in the case of the utilization of refined and specially prepared soy meal-based formulations, such as urea, waxes, a moisture-resistance agent such as a silicone, a siloxane, a fluorinated polyol, a fluoroalkyl phosphate ester, or a fluoroalkyl carboxylic ester, a composite- release promoter such as Qo-25 alkanoic acid, a salt of a Qo-25 alkanoic acid, a Qo-25 alkenoic acid, a salt of an Qo-25 alkenoic acid, and a pH modulator, to obtain the right viscosity and binder solid content, while rendering a sprayable binder and obtaining a moisture-resistant product as well as facilitating release of the composite from the press platens. Patent application WO2010028062 and WO2008011455 put in evidence the usage of defatted soy flours (Prolia^{™}) for the manufacturing of binders for fibreboards such as particleboard and MDF. Patent US8147968 describes an adhesive composition consisting of a polyamidoamine-epichlorohydrin crosslinker, a non-urea diluent containing multiple alcohol functionality on the same molecule such as diols and polyols, and an aqueous mixture of a soy meal. The protein source put in evidence is Prolia^{™}, a soy flour having a protein content of about 50 wt. % on dry weight that has been obtained after solvent extraction and therefore practically free of any vegetable oil.

However, even by comprising a high-quality defatted soy flour in combination with reactive prepolymers, the bio-based binder compositions described in the prior art require several additives to deal with the known technical drawbacks associated with the use of reactive prepolymers. Additionally, the GWP of high-quality defatted soy flours is not expected to be improved compared to standard soy flour. Finally, as soy flours are typically destined to food and feed applications, soy flours manufacturing lines need to comply with stringent sanitary standards, contributing to significantly increase the production cost. Such aspect, combined with the ethical dilemma related to the use of a high-quality food ingredient for industrial applications, limits the uptake by the industrial sector.

The environmental, technical, and economic issues identified above represent barriers for the uptake of bio-based binders comprising refined biological material by the fibreboard industry.

Therefore, a more environmentally friendly, performing, less expensive, requiring less additivation, abundant, inedible form of biological material, addressing the known drawbacks associated to reactive prepolymers, would be desirable for an inclusion in bio-based binder formulations that can be adopted by the industry.

It is object of the present invention to introduce novel bio-based binders that allow for the preparation of fibreboard composites, offering the advantages of reducing the content of fossil-based compounds and GWP of the composites manufactured, and mitigating the harmful VOCs of formaldehyde- and isocyanate-based resins, while utilising low cost, largely available, inedible biological materials.

### SUMMARY OF THE INVENTION

The Applicant noted that, even if compositions for bio-binders comprising the utilization of biological material to partially or fully substitute fossil-based chemical compounds in manufacturing fibreboard panels are known, such bio-binders are facing significant difficulties in being adopted by the wood industry for a number of environmental, technical and economic limitations. For instance, even though refining processes are deemed necessary to obtain biological materials with improved technical characteristics to be combined with reactive prepolymers in bio-based binders, extensive additivation has been proposed in the prior art. In most cases such refining processes entails the utilization of organic solvents, significant quantity of energy and dedicated manufacturing lines, resulting in not-so-green and expensive biological materials.

Surprisingly, the Applicant found that unrefined, inexpensive biological materials, such as comminuted whole oilseeds, can be conveniently used to significantly reduce the utilisation of fossil-based, non-degradable and toxic compounds in manufacturing fibreboards.

In particular, the Applicant found that the use of unrefined biological materials such as whole oilseeds, in combination with a drastically reduced amount of reactive prepolymers, allows for obtaining a binder fulfilling not only all technical requirements in terms of composite performances (e.g. Internal bonding, surface soundness and swelling) and industrial requirements (e.g. press-factor, composite release, binder stability), but also that such composition presents an improved GWP, it results in a more efficient use of resources, such as energy and water throughout the process for manufacturing the same, and it is cost competitive with fully petrochemical-derived solutions used today by the industry.

The present invention concerns a composition for an improved bio-binder. In an illustrative embodiment a bio-based binder composition comprising:
a. an unrefined biological material;
b. a liquid medium;
c. a reactive prepolymer;

wherein said unrefined biological material is selected from: oilseeds, beans, grains, yeast, larvae, or a combination thereof; and wherein said unrefined biological material comprises one or more of the following features:
   i. a fatty acid C=O stretching band of COOH between 1725 cm-1 and 1705 cm-1 that presents an absorbance of at least 0.02;
   ii. a prominent triacylglycerol C=O band between about 1750 cm-1 and 1740 cm-1 that presents an absorbance of at least 0.06; or
   iii. a prominent hydrocarbon chain C-H band between about 2950 cm-1 and 2850 cm-1 that presents an absorbance of at least 0.08 and is more prominent than the amide N-H band between 3350 cm-1 and 3250 cm-1;
as determined by solid state Fourier Transform Infrared Spectroscopy - Attenuated Total Reflection (FTIR-ATR).

In an embodiment of the invention the bio-binder has a reduced fossil-based content, a reduced GWP, and a lower cost compared to the prior art.

The present invention further concerns a method for producing a bio-based binder composition comprising the following steps:
a. mixing an unrefined biological material with a liquid medium to obtain a slurry;
b. mixing the slurry of step a. with a reactive prepolymer;
c. obtaining the bio-based binder,
wherein:
- the unrefined biological material is selected from: oilseeds, beans, grains, yeast, larvae, or a combination thereof, and comprises one or more of the following features:
   i. a fatty acid C=O stretching band of COOH between 1725 cm-1 and 1705 cm-1 that presents an absorbance of at least 0.02;
   ii. a prominent triacylglycerol C=O band between about 1750 cm-1 and 1740 cm-1 that presents an absorbance of at least 0.06; or
   iii. a prominent hydrocarbon chain C-H band between about 2950 cm-1 and 2850 cm-1 that presents an absorbance of at least 0.08 and is more prominent than the amide N-H band between 3350 cm-1 and 3250 cm-1;
   as determined by solid state Fourier Transform Infrared Spectroscopy - Attenuated Total Reflection (FTIR-ATR);
- the liquid medium is selected from a lipid, water, or a mixture thereof; and
- the reactive prepolymer is selected from an isocyanate-based prepolymer, a poly(amidoamine)-based prepolymer or an aldehyde-based prepolymer or a mixture thereof;
and wherein a hydroxyfunctional compound selected from glycerine, polysaccharides, oligosaccharides, monosaccharides, or a combination thereof can be optionally added to step a. or step b..

Under a further aspect, the present invention relates to a method of gluing a first article to at least a second article to obtain a glued product comprising:
a. applying the binder composition of the invention to a surface of a first article to obtain a binding surface; and
b. contacting the binding surface of the first article with a surface of at least a second article; and
c. curing the binder.

In a still further aspect, the invention describes a glued product obtainable by the method of gluing a first article to at least a second article, wherein:
a. the first and second articles are selected from the group consisting of a lignocellulosic material, a composite material containing a lignocellulosic material, a ceramic, a polymer, a fibreglass, a wood fibre, a ceramic powder, a plastic, a fabric and a glass, or a combination thereof; and
b. the cured binder has a weight between 1 % and 30% of the dry weight of the product.

As will be further described in the detailed description of the invention, the binder composition, methods for its preparation and for the preparation of glued products and the glued products obtainable by the method do not have the drawbacks described in the prior art.

### DEFINITIONS

Listed below are definitions of various terms used to describe this invention. These definitions apply to the terms as they are used throughout this specification and claims, unless otherwise limited in specific instances, either individually or as part of a larger group. Unless defined otherwise, all technical and scientific terms used herein generally have the same meaning as commonly understood by one of ordinary skill in the art to which this invention belongs.

As used herein, the term "comminution" is meant to carry out a reduction of the unrefined biological material particles size such that biological cell in which the lipid is present is partially disrupted. Comminuted biological material is disrupted biological material which has a paste-like or a flour-like appearance, depending on the water or lipid content of the starting material.

As used herein, the term "unrefined" applies to any biological material that has not been through a chemical or industrial process to remove unwanted parts and is therefore in a natural state, here the unwanted part is a lipid. An "unrefined biological material" is meant to comprise a biological material that is not altered in its initial composition. Examples of possible treatments that can alter the composition (and therefore are excluded from the scope of the invention) are processes aiming at removing the majority of lipid content, such as reducing seed to flour, flakes, meal or solvent extraction and/or addition of synthetic compounds, such as silicone, metal oxides or metal silicates. On the contrary, the biological material may undergo dehulling, cleaning, washing or similar processes prior to use, that do not alter the composition of the biological material and fall within the definition of "untreated biological material". Similarly, mechanical expelling aiming at removing oil with the purpose of adding back an oil to the biological material in a subsequent step is considered to fall within the definition of "untreated biological material".

As used herein, the term "lipid" (or "lipids") is a compound (or a mixture of compounds) that is insoluble in water but soluble in organic solvents such as alcohols, chloroform, and ethers. Lipids are also known as fatty acids and their derivatives, and substances related biosynthetically or functionally to these compounds such as phospholipids, sterols, monoglycerides, diglycerides and triglycerides (triacylglycerols or TAGs), or a combination thereof that can be found in a vegetable oil.

As used herein, the term "meal" is a residual material obtained after extracting lipids from any oil-bearing material often performed by means of mechanical expelling or applying solvent extraction to the oil-bearing material. The lipid content in the meal obtained thereof is below 8 %, 5% or 1% on dry weight (w/w), depending on type and efficiency of extraction process.

As used herein, the term "formaldehyde-free binder" is a thermosetting binder free of any formaldehyde that can be cured by applying to the binder heat, pressure, or a mixture thereof for the production of No-Added-Formaldehyde products, selected from isocyanates, poly-amidoamines, or a combination thereof.

As used herein, the term "liquid medium" is intended to include any medium having a viscosity of no more than 100.000 cps in which water and lipids are included such as water from the grid, a vegetable oil, or a combination thereof.

As used herein, the term "mixture of water and a lipid" is a medium obtained from an emulsifying process in which the water has been dispersed in the lipid or vice versa through chemical or mechanical aids, such as additivation with surfactants, emulsifiers, applying shear to the mixture, or a combination thereof.

As used herein, the term "hydroxyfunctional compounds" is intended to include glycerin, carbohydrates, polysaccharides and sugars. Preferred hydroxyfunctional compounds can be sugars (such as dextrose monohydrate, glucose, fructose, galactose, sucrose, lactose, and maltose), polysaccharides (such as cellulose, chitin, glycogen, pectins, starch and xylans), carbohydrate syrups (such as corn syrup, high fructose corn syrup, high maltose corn syrup, glucose syrup), and their blends.

As used herein, the term "reactive prepolymer" is a compound, material, or mixture that can be reacted to form a polymer for binding purposes. Such prepolymers include, for example, aldehyde-based prepolymers, amine-based prepolymers, amide-based prepolymers, amidoamine-based prepolymers, and isocyanate-based prepolymers.

As used herein, the term "about" will be understood by persons of ordinary skill in the art and will vary to some extent on the context in which it is used. As used herein when referring to a measurable value such as an amount, a temporal duration, and the like, the term "about" is meant to encompass variations of +/-20 % or +/-10 %, including +/-5 %, +/-1 %, and +/-0.1 % from the specified value, as such variations are appropriate to perform the disclosed methods.

### DESCRIPTION OF THE FIGURES

FIGURE 1: FT-IR ATR spectrum for Unrefined Castor seeds
FIGURE 2: FT-IR ATR spectrum for Unrefined Jatropha seeds
FIGURE 3: FT-IT ATR spectrum for Unrefined Rapeseeds
FIGURE 4: FT-IR ATR spectrum for Unrefined Soybeans
FIGURE 5: FT-IR ATR spectra comparison of Unrefined Jatropha seeds and Unrefined Soybean
FIGURE. 6: FT-IR ATR spectrum for Unrefined Soybeans_1900_1200cm-1
FIGURE 7: FT-IR ATR spectrum for unrefined Soy oil
FIGURE 8: FT-IR ATR spectrum for defatted soy flour
FIGURE 9: FT-IR ATR spectra comparison of unrefined soybean and defatted (refined) soy flour.

### DETAILED DESCRIPTION OF THE INVENTION

The present invention concerns a composition for an improved bio-binder. In an illustrative embodiment a bio-based binder composition comprising:
a. an unrefined biological material;
b. a liquid medium;
c. a reactive prepolymer;

wherein said unrefined biological material is selected from: oilseeds, beans, grains, yeast, larvae, or a combination thereof; and wherein said unrefined biological material comprises one or more of the following features:
   i. a fatty acid C=O stretching band of COOH between 1725 cm-1 and 1705 cm-1 that presents an absorbance of at least 0.02;
   ii. a prominent triacylglycerol C=O band between about 1750 cm-1 and 1740 cm-1 that presents an absorbance of at least 0.06; or
   iii. a prominent hydrocarbon chain C-H band between about 2950 cm-1 and 2850 cm-1 that presents an absorbance of at least 0.08 and is more prominent than the amide N-H band between 3350 cm-1 and 3250 cm-1;
as determined by solid state Fourier Transform Infrared Spectroscopy - Attenuated Total Reflection (FTIR-ATR).

The composition of the invention is a bio-based No-Added-Formaldehyde binder composition.

In a preferred aspect, the bio-based binder has a Global Warming Potential below 1,7 kg CO2-eq per kg of bio-binder dry matter weight; in an even more preferred aspect, the bio-based binder has a negative GWP.

In an aspect of the invention, the bio-based binder is fully biodegradable.

In a preferred aspect, in the composition of the invention said unrefined biological material is oilseeds, selected from: jatropha seeds, soybeans, camelina seeds, castor seeds, cottonseeds, flaxseeds, jojoba seeds, mahua seeds, maize germs, neem seeds, pongamia seeds, rapeseeds, sunflower seeds, thistle seeds, or a combination thereof.

More preferably said unrefined biological material is jatropha seeds, castor seeds, rapeseeds, soybeans or a combination thereof.

Surprisingly, it has been found that the unrefined biological material slurry can reduce pMDI or urea-formaldehyde dosages otherwise utilised to manufacture EN-312 P2 and/or P3 type fibreboards without compromising the productivity of the fibreboard mill. Even more surprisingly it was found that no further additivation was required when utilizing such a slurry to meet moisture resistance criteria nor is there a need for any pMDI designated release agents while running production.

Jatropha curcas (J. curcas) is an inedible drought resilient crop well known for its biofuels production, soil restoration in semi-arid areas and carbon sequestration potential. Baumert (2014) teaches that undomesticated varieties of J. curcas, cultivated in semi-arid areas while applying intercrop management intervention systems, that yield 1 ton of J. curcas oilseed per hectare per year, have a total carbon sink of about 4 kg CO₂ equivalent per kg of J. curcas seeds. Recent developments towards domesticated varieties, hence genetically improved J. curcas plants that yield more biomass per cultivated area, accompanied by Sustainable Land Management (SLM) measures are means to further extent the carbon sink potential of J. curcas. Therefore, the cultivation of J. curcas in semi-arid areas is considered a means to mitigate climate change, a mitigation strategy that can be exploited even more when utilising J. curcas oilseeds in bio-based binders that are otherwise derived from edible crops utilising arable land.

J. curcas oilseeds are often processed by means of conventional mechanical expellers yielding oil and a press-cake that primarily consists of shells, protein and residual oil. In the past, projects related to the cultivation of J. curcas on industrial scale were often abandoned due to limited industrial applications for its oil co-product fractions, i.e. protein-rich press-cake due to the presence of antinutritional factors. Ever since, significant research has been put on upgrading the nutritional aspects of recoverable J. curcas oilseed fractions and exploring valorisation routes for each constituent fraction separately, i.e. the oil-, protein-, (hemi)cellulose, and lignocellulosic fraction, by applying different oilseed processing methods.

Besides the use of conventional mechanical expellers, organic solvents for processing deshelled J. curcas seeds, i.e. only the seeds kernel, are also used to recover oil and a co-product known as a defatted oilseed meal. However, utilising such a method presents several drawbacks related to safety concerns regarding flammability and inherently not being environmentally friendly.

The binder composition of the present invention avoids the above indicated drawbacks by providing cold tack, release of the panel from the metal plates while valorising a crop that can grow under marginal circumstances. The usage of J. curcas is a very valid alternative to the usage of edible material that have more noble destinations, such as human and animal nutrition.

Advantageously, in a preferred aspect, the binder composition not only allows to avoid adverse effects of the presence of indoor formaldehyde, but it also provides benefits in mitigating climate adversities.

In the described composition, the unrefined biological material is preferably a comminuted unrefined biological material having a particle size in the range of from about 1 micron to about 300 microns, or from about 10 microns to about 200 microns, as measured with a granulometer (for example Malvern or FKV, Sympatec).

By comminuting it is intended that the biological material is disrupted to have a paste-like or a flour-like appearance. This procedure does not refine the biological material or significantly modify its composition.

In a further aspect the unrefined biological material of the binder composition has been partially or fully dehulled.

By fully dehulled it is intended that the seed hull is removed.

In a further embodiment the unrefined biological material of the binder composition has been partially defatted removing no more than 50 % of the lipid content of the unrefined biological material.

In a preferred aspect, the unrefined biological material has been partially or fully subjected to treatments that do not essentially modify its original composition in terms of lipid and protein content such as heat treatment, enzymatic treatment, ultrasound, microwaves, cavitation, or a combination thereof. By essentially or substantially modifying, it is intended that the FTIR spectrum absorbance of the biological material in terms of lipids and protein is at most 50%, preferably 30% and more preferably 10% modified.

Under a still preferred aspect, in the composition of the invention, the unrefined biological material comprises one or more of the following features:
i. a fatty acid C=O stretching band of COOH between 1725 cm⁻¹ and 1710 cm⁻¹ that presents an absorbance of at least 0.04;
ii. a prominent triacylglycerol C=O band between about 1750 cm⁻¹ and 1740 cm⁻¹ that presents an absorbance of at least 0.06; or
iii. a prominent hydrocarbon chain C-H band between about 2950 cm-1 and 2850 cm⁻¹ that presents an absorbance of at least 0.09 and is more prominent than the amide N-H band between 3350 cm-1 and 3250 cm-1;
as determined by solid state Fourier Transform Infrared Spectroscopy - Attenuated Total Reflection (FTIR-ATR).

In a further preferred aspect, the unrefined biological material comprises one or more of the following features:
i. a fatty acid C=O stretching band of COOH between 1725 cm⁻¹ and 1705 cm⁻¹ that presents an absorbance of at least 0.05;
ii. a prominent triacylglycerol C=O band between about 1750 cm⁻¹ and 1740 cm⁻¹ that presents an absorbance of at least 0.08;
iii. a prominent hydrocarbon chain C-H band between about 2950 cm⁻¹ and 2850 cm⁻¹ that presents an absorbance of at least 0.09 and is more prominent than the amide N-H band between 3350 cm⁻¹ and 3250 cm⁻¹;
as determined by solid state Fourier Transform Infrared Spectroscopy - Attenuated Total Reflection (FTIR-ATR).

In a specific aspect, in case the composition of the bio-binder presents no bands between about 1725 cm-1 and 1705 cm-1 or about 1750 cm-1 and 1740 more prominent than the band between about 1650-1620, as determined by solid state Fourier Transform Infrared Spectroscopy - Attenuated Total Reflection (FTIR-ATR), the liquid medium comprises at least a lipid.

Preferably, in the composition of the invention, the binder on dry weight comprises the unrefined biological matter in a range from about 1 % to about 90 % (w/w).

More preferably, in the composition of the invention the liquid medium is a lipid, water, or a mixture thereof, wherein the liquid medium is camelina oil, corn oil, rapeseed oil, sunflower oil, jatropha oil, soybean oil, or a combination thereof.

The liquid medium of the composition may be a mixture comprising a vegetable oil and water in a ratio ranging from 6:1 to 1:6, preferably from 5:1 to 1:5, and more preferably from 2:1 to 1:3.

The liquid medium may be present from about 10 % (w/w) to about 90 % (w/w) of the liquid binder composition.

In a preferred composition of the invention, the reactive prepolymer is an isocyanate-based prepolymer, a poly(amidoamine)-based prepolymer or an aldehyde-based prepolymer or a mixture thereof.

More preferably the reactive prepolymer of the composition is:
- polymeric methylene diphenyl diisocyanate (pMDI),
- poly(amidoamine)-epichlorohydrin (PAE), or
- an aldehyde-based prepolymer selected from urea-formaldehyde (UF), urea-melamine-formaldehyde (UmF), melamine-urea-formaldehyde (MUF), or a mixture thereof.

In a further embodiment the binder composition, further comprises a hydroxyfunctional compound selected from glycerine, polysaccharides, oligosaccharides, monosaccharides, or a combination thereof, preferably the hydroxyfunctional compounds are: sugars, preferably dextrose monohydrate or syrups preferably corn syrup having a dextrose content in the range from 0.1 % to 100% on dry weight.

The binder composition may further comprise:
- a viscosity reducing agent; preferably ammonium sulfite, lithium sulfite, potassium sulfite, sodium metabisulfite, sodium sulfite, or a combination thereof;
- an anti-foam agent, a defoaming agent, or a combination thereof; preferably the anti-foam agent is an alcohol ethoxylate or an alcohol propoxylate and the defoaming agent is a fatty acid ethoxylates, or a combination thereof;
- a flame-retardant agent.

The binder composition of the invention preferably has one or more of the following features on dry weight:
i. unrefined biological material present from about 1 % to about 95 % (w/w) of the binder composition;
ii. lipid medium present from about 1 % to about 95 % (w/w) of the binder composition;
iii. reactive prepolymer present from about 1 % to about 95 % (w/w) of the binder composition;
iv. hydroxyfuctional compound present from about 1 % to about 150 % (w/w) of the comminuted biological material;
v. viscosity agent present from about 0.1 % to about 2 % (w/w) of the comminuted biological material;
vi. antifoam agent, defoam agent, or combination thereof present from about 0.001 % to about 1 % (w/w) of the comminuted biological material.

The present invention further concerns a method for producing a bio-based binder composition comprising the following steps:
a. mixing an unrefined biological material with a liquid medium to obtain a slurry;
b. mixing the slurry of step a. with a reactive prepolymer;
c. obtaining the bio-based binder,
wherein:
- the unrefined biological material is selected from: oilseeds, beans, grains, yeast, larvae, or a combination thereof, and comprises one or more of the following features:
   i. a fatty acid C=O stretching band of COOH between 1725 cm-1 and 1705 cm-1 that presents an absorbance of at least 0.02;
   ii. a prominent triacylglycerol C=O band between about 1750 cm-1 and 1740 cm-1 that presents an absorbance of at least 0.06; or
   iii. a prominent hydrocarbon chain C-H band between about 2950 cm-1 and 2850 cm-1 that presents an absorbance of at least 0.08 and is more prominent than the amide N-H band between 3350 cm-1 and 3250 cm-1;
   as determined by solid state Fourier Transform Infrared Spectroscopy - Attenuated Total Reflection (FTIR-ATR);
- the liquid medium is selected from a lipid, water, or a mixture thereof; and
- the reactive prepolymer is selected from an isocyanate-based prepolymer, an poly(aminoamine)-based prepolymer or an aldehyde-based prepolymer or a mixture thereof;
and wherein a hydroxyfunctional compound selected from glycerine, polysaccharides, oligosaccharides, monosaccharides, or a combination thereof can be optionally added to step a. or step b..

In the method for producing a bio-based binder composition:
- the unrefined biological material is comminuted prior, during, or after being mixed with the liquid medium or the reactive prepolymer, or
- the unrefined biological material is comminuted prior, during, or after being mixed with the reactive prepolymer.

Under a preferred aspect of the method, the reactive prepolymer, the unrefined biological material and the liquid medium are fed separately to an in-line static, dynamic or combined static and dynamic mixer, prior to spraying the bio-based binder onto a substrate.

Preferably, in the method for producing a bio-based binder composition, the reactive prepolymer in the bio-based binder of step c. has a droplets dimension from about 20 microns to about 200 microns, as measured with a granulometer.

Under a further aspect, the present invention relates to a method of gluing a first article to at least a second article to obtain a glued product comprising:
a. applying the binder composition of the invention to a surface of a first article to obtain a binding surface; and
b. contacting the binding surface of the first article with a surface of at least a second article; and
c. curing the binder.

In the present method for gluing, the binder is preferably cured by applying pressure, heat, or a combination thereof.

In a still preferred method, the first and at least second articles are each independently a material chosen from the group consisting of: a lignocellulosic material, a composite material containing a lignocellulosic material, a metal, a ceramic, a polymer, a plastic, a fabric, a glass, or a combination thereof, wherein said lignocellulosic material is preferably wood.

In a still further aspect, the invention describes a glued product obtainable by the method of gluing a first article to at least a second article, wherein:
a. the first and second articles are selected from the group consisting of a lignocellulosic material, a composite material containing a lignocellulosic material, a ceramic, a polymer, a fibreglass, a wood fibre, a ceramic powder, a plastic, a fabric and a glass, or a combination thereof; and
b. the cured binder has a weight between 1 % and 30% of the dry weight of the product.

### EXAMPLES

Reference is now made to the following examples, which together with the above descriptions illustrate some embodiments of the invention.

### Particleboard prepared from binders on lab scale

Unless specified differently, the particleboard sample density was targeted at 680 kg/m3 having the dimensions 300 x 300 x 18 mm. A mixture of fibres from recycled origin was used, having a moisture content of about 2%, with a face to core ratio of 35/65. For each sample the following procedure was applied: weigh the fibres for the face layer to the nearest gram and load the fibres into a rotary blender. Weigh the binder such that the required amount of binder is dosed onto the fibres used for the face-layers of the particleboard. Continue mixing the fibres with the binder, after having sprayed or poured the desired amount of binder, for at least 4 minutes to ensure that the binder has been distributed evenly onto the fibres. Remove the resinated fibres and place it in a clean container. Repeat the same process for the core layer. For both resinated fibres, being for the core as well as for the face layer, take samples for humidity analysis to calculate the overall mat humidity. Spread half the amount of resinated surface layer fibres into a forming box that has been put onto a metal plate covered by an aluminium foil, having at least the surface area of the sample dimensions ought to be obtained. Take care in evenly distributing the fibres onto the metal plate to avoid any issues regarding density distribution in the particleboard sample. Evenly distribute all the core layer fibres onto the previously assembled face layer and complete the procedure by evenly distributing the remaining face layer fibres. Use a plywood panel having slightly smaller dimensions than the forming box to press down manually the formed mat and hold firmly for 10 seconds. Remove the forming box while keeping the pressure on the plywood panel to expose the mat. Remove the plywood panel, put another piece of release paper (aluminium foil) and apply another metal plate on top of the formed mat. Place the formed mat onto the loading area of the press and place support metal bars on the side of the mat having the desired thickness of the panel to be obtained. Verify the pressing temperature at the surface of the hotplates to be 200 degrees Celsius.

Close the press immediately after loading and start the press cycle. The press cycle applies a pressure of 40 kg/cm2 to the mat and holds this pressure till a temperature of 105 degrees Celsius is achieved in the core of the mat measured by a thermosensor previously put in the core layer. Upon reaching the temperature a degassing step is initiated by relieving pressure to release excessive moisture. Afterwards, the press is closed again for a duration matching the desired press factor. Remove the panel from the press, remove the metal press platens and release papers, store the manufactured samples in an environmentally controlled room and cut and test specimen according to EN-312 P2 and EN-312 P3 requirements.

### EXAMPLE 1: Preparation of binders from Castor, Jatropha curcas, Rapeseed and Soybean oilseeds

Castor, Jatropha, Rapeseed and Soybeans seeds were comminuted separately. Prior to comminution the Castor and Jatropha seeds were partially dehulled into a shell fraction and a kernel fraction (with 10% hulls). The Rapeseeds and Soybeans were comminuted in their unrefined state. Each batch of oilseeds was crushed by a modified olive mill hammer crusher on which the grid had holes of 1.5 mm in diameter. The temperature of the obtained comminuted biological material, i.e. seed material after crushing, which can be a paste or a dry, flour-like material depending on the water and/or oil content of the starting biological material, was in the range of 30 - 70 degrees Celsius.

A paste-like texture was obtained for comminuting respectively Castor, Jatropha, and Rapeseeds whereas for comminuting soybeans a flour texture was obtained. Product compositions of the comminuted products are given in Table 1 below.

### Table 1:

**Table 1: Composition of oilseed fractions.**

| **Comminuted seeds** | | **Composition** | | | |
|---|---|---|---|---|---|
| **Seeds** | **Fraction** | **Humidity** | **Lipids** | **Protein** | **Other** |
| Castor | Kernel + 10 %hull | 5.1% | 43.5% | 20.8% | 30.6% |
| Jatropha | Kernel + 10 %hull | 5.5% | 40.4% | 20.1% | 34% |
| Rapeseed | Whole | 10.1% | 39.9% | 20.0% | 30.0% |
| Soybean | Whole | 11.8% | 20.7% | 33.4% | 34.1% |

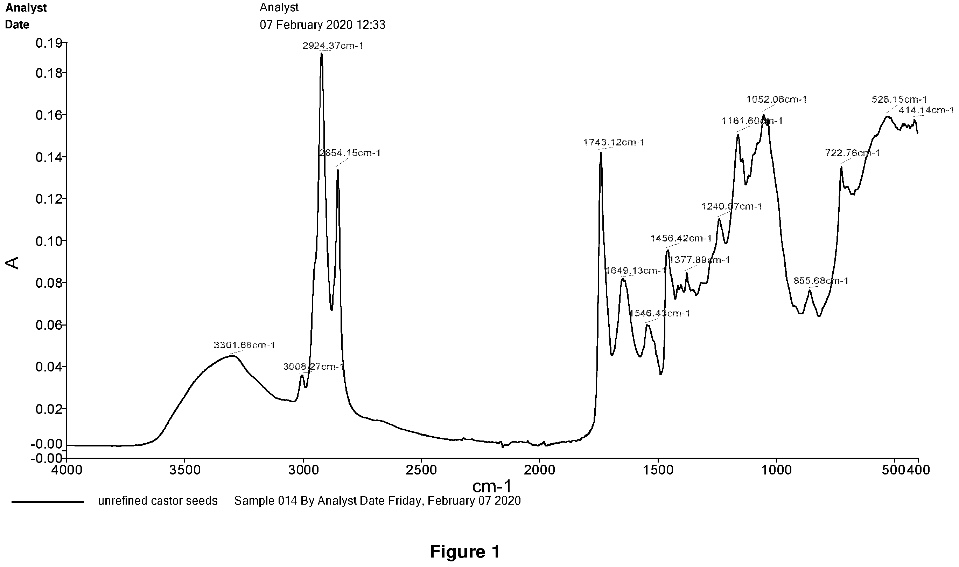

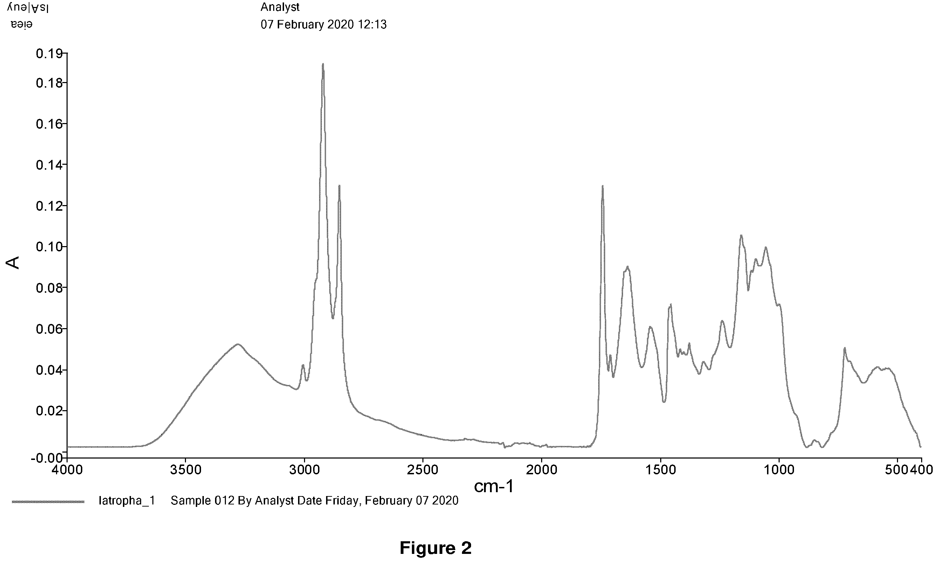

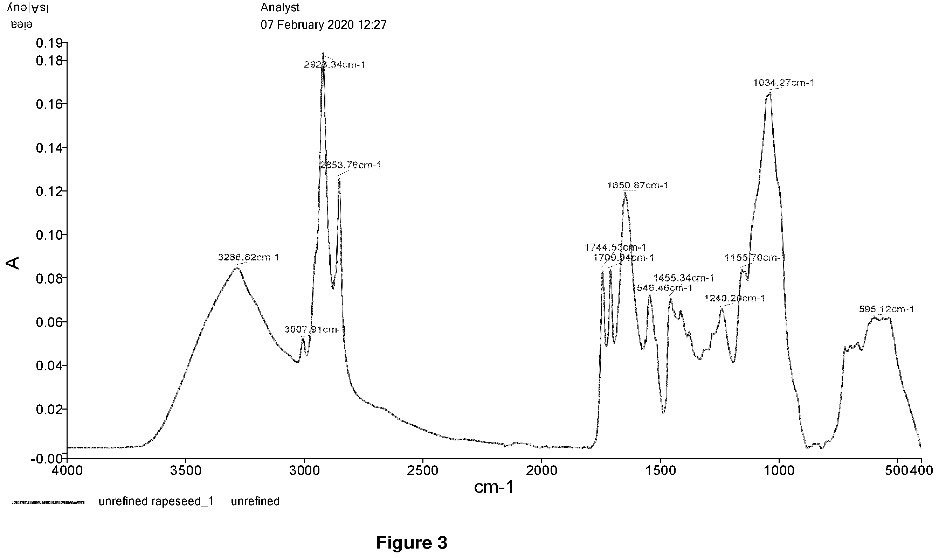

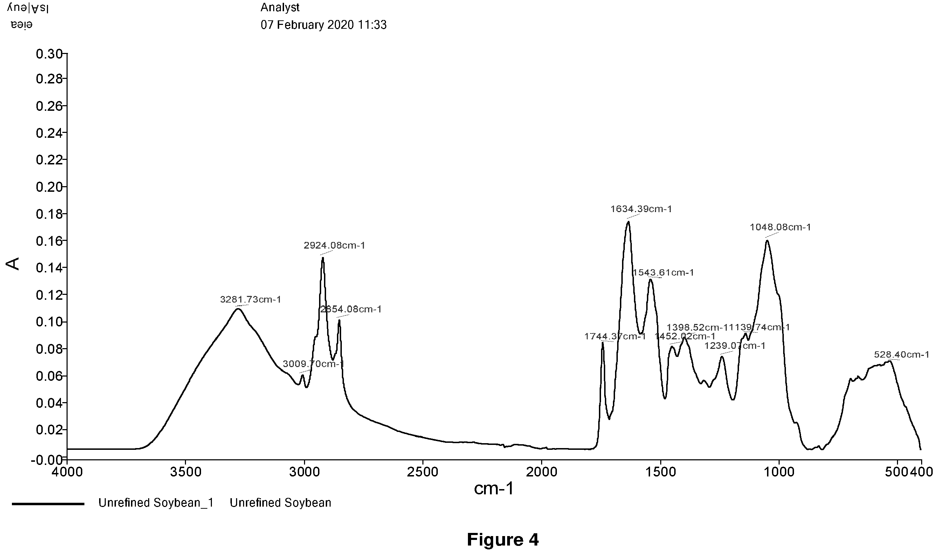

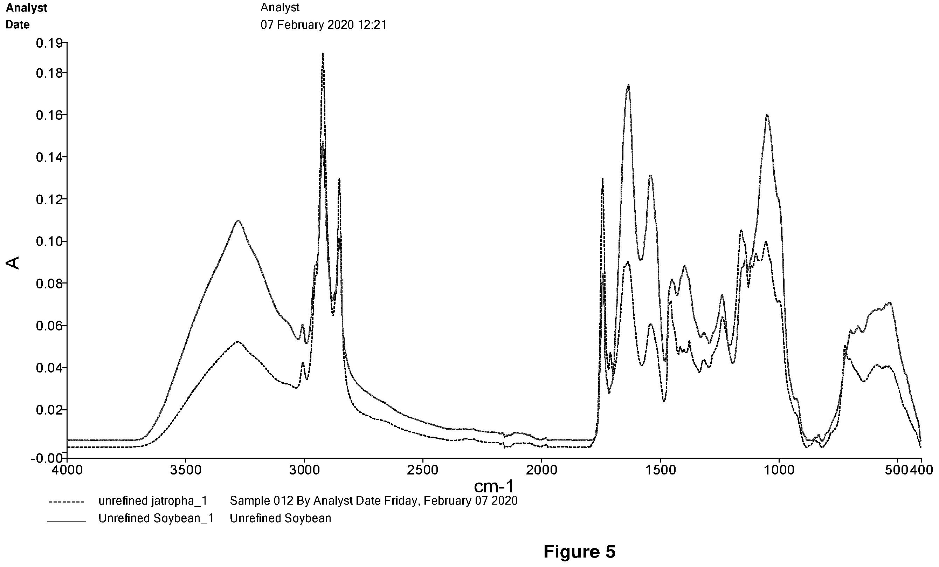

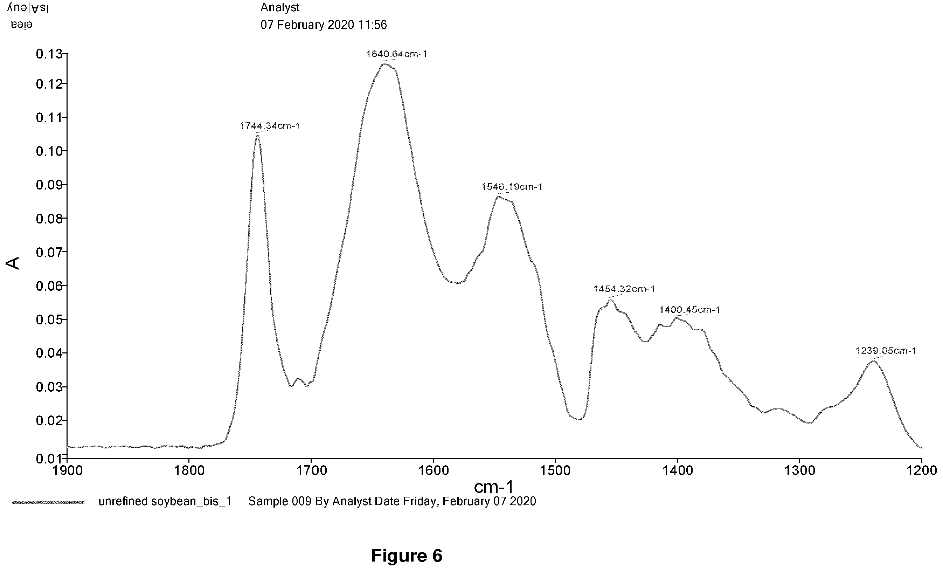

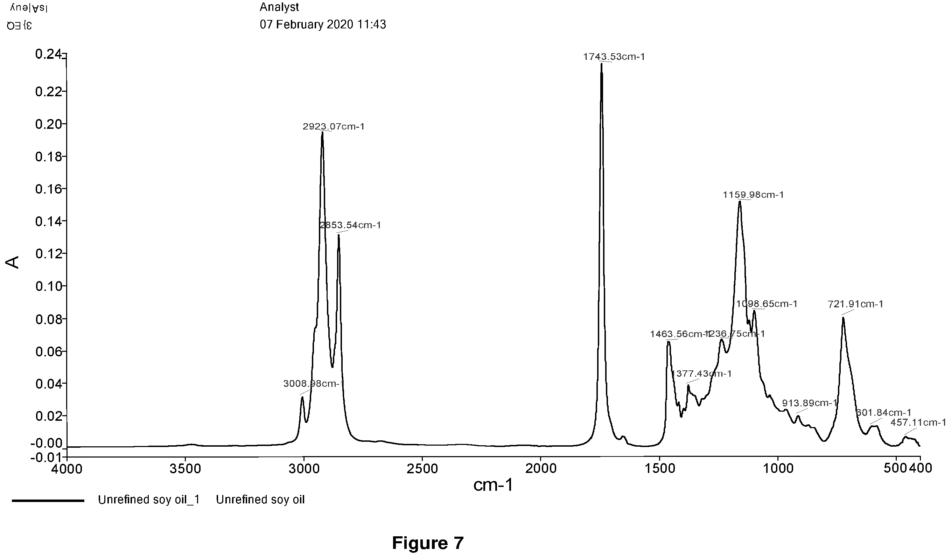

Samples of unrefined oilseeds were analysed by solid state Fourier Transform Infrared Spectroscopy - Attenuated Total Reflection (FTIR-ATR), with a Perkin Elmer Spectrum instrument (version 10.5.3). Figures 1-7 respectively show the FT-IR ATR spectrum for:
Unrefined Castor seeds (Figure 1), Unrefined Jatropha seeds (Figure 2), Unrefined Soybeans (Figure 3), Unrefined Rapeseeds (Figure 4), Unrefined Jatropha seeds and Unrefined Soybean (Figure 5), Unrefined Soybeans_1900_1200 cm-1 (Figure 6) and FT-IR ATR spectrum for Soy oil (Figure 7).

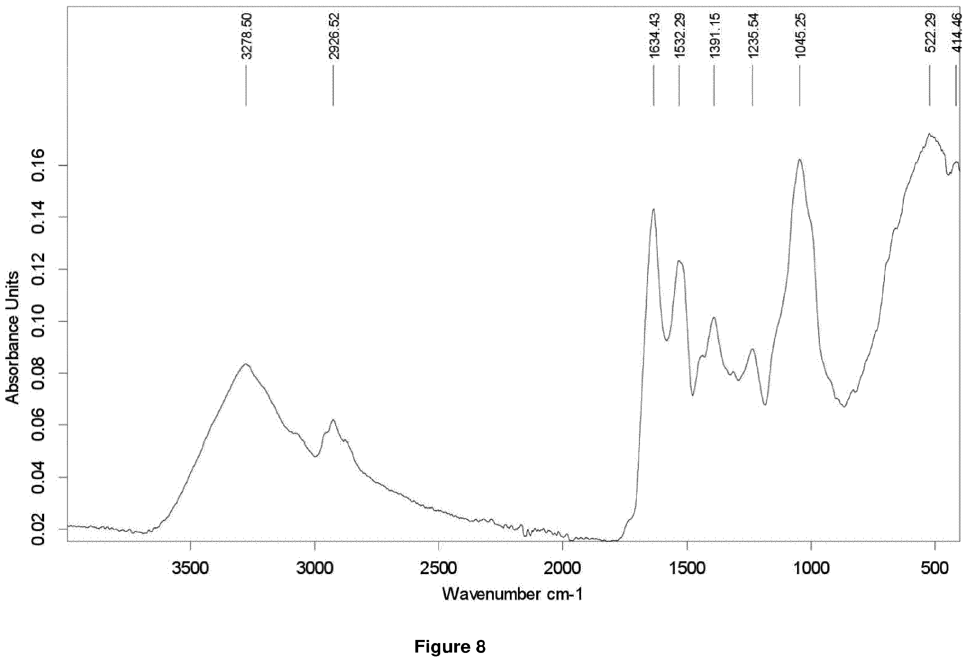

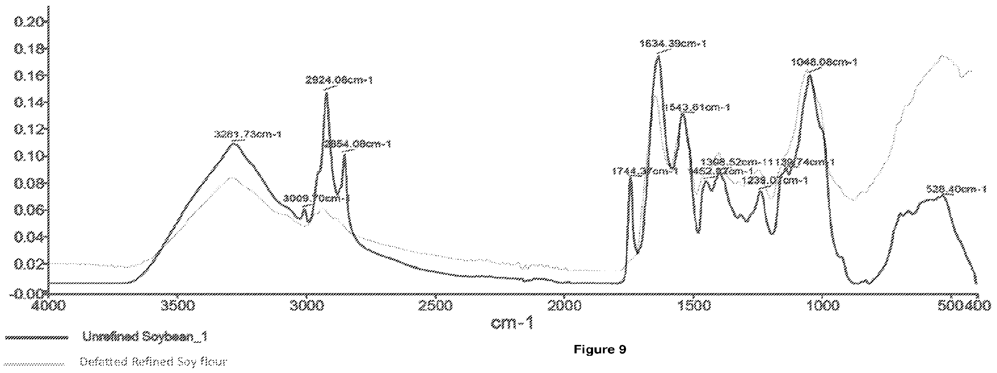

As can be seen from the IR spectra, in which the Absorbance is measured in arbitrary units (a.u.) and the Frequency in cm⁻¹, the unrefined nature of the oilseed is evident when comparing with a defatted soy flour (Figure 8 and Figure 9) since a prominent triacylglycerol C=O band between about 1750 cm-1 and 1740 cm-1 presents an absorbance of at least 0.06; a prominent hydrocarbon chain C-H band between about 2950 cm-1 and 2850 cm-1 presents an absorbance of at least 0.08 and is more prominent than the amide N-H band between 3350 cm-1 and 3250 cm-1; an unsaturated lipid =C-H band between about 3015 cm-1 and 3005 cm-1 presents an absorbance of at least 0.02.

The obtained whole comminuted whole soybeans and rapeseed and partially dehulled Castor and Jatropha seeds were divided over batches to be used for mixing with water, oil, sugars, or a combination thereof, respectively section a), section b), and section c) as described below.

### a) Aqueous medium:

Each of the comminuted oilseed materials was mixed with water to obtain a slurry till a final solid content was reached of 32.5 %.

The slurry codes are identified in Table 2a, 2b and 2c below.

**Table 2a**

| **Slurry code** | **Oilseed material** |
|---|---|
| S1 | Partially dehulled Castor seeds |
| S2 | Partially dehulled Jatropha seeds |
| S3 | Whole Rapeseeds |
| S4 | Whole Soybeans |

### b) Oil medium:

The comminuted materials obtained from soybeans was mixed with a precalculated amount of Jatropha oil, such that after dispersing the comminuted soybean material a pumpable product was obtained. The amount of oil used to render the comminuted soybean material fluid was according to a ratio of 4:3 respectively kgs of oil : kgs of soybeans. The solid content of the obtained slurry was about 95 %. Prior to mixing the slurry to a reactive prepolymer, the slurry is dispersed in a precalculated amount of water such to obtain a solid content of 42.5 %. It was observed that dispersing the comminuted soybean material present in oil in water was more convenient compared to the dispersion of only the comminuted soybean flour into water. Table 2b:

| **Slurry code** | **Oilseed material** |
|---|---|
| S4-O | Whole Soybeans |

### c) Sugar addition onto slurries:

The obtained slurries, respectively Jatropha paste dispersed into water having a solid content of 32.5 % and soybean flour dispersed into oil (soybean oil slurry) having a solid content of 95 %, were mixed with a sugar solution. The sugar solution used was a precalculated amount of dextrose monohydrate dissolved into water such that when mixing the sugar solution with the slurry a final solid content of 45 % was obtained. The Jatropha slurry, as described in section a), was mixed with a sugar solution having a solid content of 65 % whereas the Soybean oil slurry, as described in section b), was mixed with a sugar solution having a solid content of 16.5 %. The utilised ratio sugar solids to slurry solids was 0.9:1 and 0.3:1 respectively for Jatropha slurry and Soybean oil slurry.

**Table 2c:**

| **Slurry code** | **Oilseed material** |
|---|---|
| S2-sug | Partially dehulled Jatropha seeds |
| S4-O-sug | Whole Soybeans |

The obtained slurries form above a), b), and c), i.e. S1, S2, S3, S4, S4-O, S2-sug, and S4-O-sug of tables, 2a, 2b, and 2c, binders are prepared by mixing each slurry separately with a commercially available pMDI. For mixing purposes, beakers were prepared where the pMDI was added onto the slurry according to different ratios ranging from about, on dry-weight solids that is, 3:1 to about 1:3.3 concerning resins utilized in the core and face layer respectively. After completion of the pMDI addition onto the slurry the mixture was vigorously mixed to obtain a homogenous mixture where no isocyanate droplets were longer observable, i.e. having any droplet size in the range of about 20 microns to about 200 microns. All binders prepared, obtained from mixing the various slurries with pMDI, resulted stable and applicable products from about 30 min to over 2 hours.

### EXAMPLE 2: Particleboard preparation from slurries with pMDI

Particleboards were manufactured according to the described particleboard manufacturing method. For each panel, the pMDI was pre-mixed with the slurry such that, upon pouring the binder onto the wood fibres, the desired dosage of pMDI solids, as well as slurry solids, was achieved. The dosage percentage represents the amount of binder in the particleboard layer on dry weight upon curing. The moisture content of the fibres at the end of the resination step for each manufactured matrass was about 3,5 % and 11,5 % for the core- and face layer respectively by means of adding water if required. After curing, the panels were tested to obtain the mechanical properties Internal bond and Surface soundness. The binder compositions utilised and their relative dosage onto the wood fibres are given in table 3 below.

### Table 3:

**Table 3: resin solid dosage onto wood, in terms of dry weight, of the particleboards manufactured.**

| **PANELS** | **SLURRY** | **CORE** | | | **FACE** | | |
|---|---|---|---|---|---|---|---|
| | | **Dosage** | **pMDI** | **Slurry** | **Dosage** | **pMDI** | **Slurry** |
| **P1** | S1 | 2.7% | 2.1% | 0.7% | 6.6% | 1.5% | 5.1% |
| **P2** | S2 | 2.7% | 2.1% | 0.7% | 6.6% | 1.5% | 5.1% |
| **P3** | S3 | 2.7% | 2.1% | 0.7% | 6.6% | 1.5% | 5.1% |
| **P4** | S4 | 2.7% | 2.1% | 0.7% | 6.6% | 1.5% | 5.1% |
| **P5** | S4-O | 2.7% | 2.1% | 0.7% | 6.6% | 1.5% | 5.1% |
| **P6** | S2-sug | 2.7% | 2.1% | 0.7% | 6.6% | 1.5% | 5.1% |
| **P7** | S4-O-sug | 2.7% | 2.1% | 0.7% | 6.6% | 1.5% | 5.1% |

Regarding the binders utilised to manufacture the core layer of the particleboard water was used to dilute the binder as such to render the binder fluid such that the binder can be poured or sprayed onto the wood fibres.

Samples were cut and tested accordingly after stabilization of the panels. Results of these tests are given in Table 4 below.

### Table 4:

**Table 4: pMDI-based panel results.**

| **Panel** | **Slurry** | **RAW Density** | **Thickness swelling** | **Internal bond** | **Surface soundness** |
|---|---|---|---|---|---|
| | | EN-323 | EN-317 | EN-319 | EN-319 |
| **#** | | **kg/m3** | **% (24h)** | **MPa** | **MPa** |
| **P1** | S1 | 683 | 17.73% | 0.39 | 1.10 |
| **P2** | S2 | 681 | 20.34% | 0.37 | 1.07 |
| **P3** | S3 | 683 | 18.48% | 0.38 | 1.03 |
| **P4** | S4 | 680 | 17.43% | 0.38 | 1.14 |
| **P5** | S4-O | 685 | 15.92% | 0.35 | 1.19 |
| **P6** | S2-sug | 689 | 24.83% | 0.35 | 1.23 |
| **P7** | S4-O-sug | 679 | 22.44% | 0.36 | 1.25 |

From the prepared panels it is evident that the combination of pMDI with unrefined oilseed material results in panels with mechanical characteristics conform EN-312 P2 criteria. It was observed that when utilising slurries with significant lipid content the panel, i.e. the composite, without applying any aluminium foil, was easy to detach from the metal platens. For Jatropha, i.e. S2, in particular a good release of the panel was obtained without further addition of oil whereas that for Soybean, i.e. S4, the composite remained stuck to the metal platens. However, the utilisation of Soybean dispersed in oil, i.e. S4-O, this problem was not encountered.

It will appear evident to the skilled person the advantage of utilizing the unrefined bio-binders in combination with pMDI, as the latter is well known not to facilitate composite release from the metal platens of the hotpress without the usage of pMDI dedicated composite release agents.

### Example 3: Particleboard preparation from slurries with PAE for surface layers

Particleboards were manufactured according to the described particleboard manufacturing method. For the panel, pMDI was utilised in the core while for the face layers a mixture was utilised containing a commercially available PAE, having a solid content of about 25 %, with slurry S2-sug having a solid content of 45 %. The dosage percentage represents the amount of binder in the particleboard layer on dry weight. Prior to resination of the fibres, the moisture content was adjusted, when necessary, to 3,5 % and 11,5 % for the core- and face layer respectively by means of adding water. The binder composition utilised and their relative dosage onto the wood fibres are given in table 5 below.

### Table 5:

**Table 5: resin solid dosage in terms of dry weight of the particleboard.**

| **PANELS** | **SLURRY** | **CORE** | | **FACE** | | |
|---|---|---|---|---|---|---|
| | | **Dosage** | **pMDI** | **Dosage** | **PAE** | **Slurry** |
| **P8** | S2 | 2.75% | 2.75% | 7.0% | 1.5% | 5.5% |

Upon stabilisation of the prepared panels samples were cut and tested accordingly. Results of these tests are given in Table 6 below.

### Table 6:

**Table 6: PAE based panel performances according to EN-312 testing requirements**

| **Panel** | **RAW Density** | **Thickness swelling** | **Internal bond** | **Surface soundness** |
|---|---|---|---|---|
| | EN-323 | EN-317 | EN-319 | EN-319 |
| **#** | **kg/m3** | **% (24h)** | **MPa** | **MPa** |
| **P8** | 685 | 18.59% | 0.35 | 0.99 |

### Example 4: Industrially prepared particleboard by binder derived from J. curcas

About 1200 kg of *J. curcas* seeds were partially decorticated to obtain a decorticated fraction. About 800 kg of partially decorticated J. curcas seeds were crushed through a 15 kW hammer crusher into a comminuted biological material which in this case has the consistency of a paste. The paste has been diluted and mixed with water to obtain a slurry having a solid content of about 38% w/w. The slurry was then pumped to an in-line dynamic mixer to be mixed with commercially available pMDI. The in-line dynamic mixer set-up was utilized for mixing the slurry with pMDI for the core as well as for the face layers of the particleboard and its dosages are given in table 7 below.

### Table 7:

**Table 7: Dosage of pMDI and slurry onto the wood fibres for the core and face layers of a particleboard panel.**

| **CORE** | | | **FACE** | | |
|---|---|---|---|---|---|
| **Dosage** | **pMDI** | **Slurry** | **Dosage** | **pMDI** | **Slurry** |
| 3.5% | 2.0% | 1.5% | 6.0% | 1.5% | 4.5% |

The wood fibres were originated from recycled wood material and had a moisture content of 1.5 % that was adjusted to 3.5 % for the core layer and 11.5 % for the face layer prior to dosing the binder. Flow-rates were set as such to manufacture particleboards having a density of 680 kg/m3 for which multiple press-factors were applied, respectively 7, 6, and 5 seconds per millimetre, of which its impact on panel performances are given in table 8 below.

### Table 8:

**Table 8: Particleboard characteristics according to EN-312 requirement testing procedures at different pressfactors.**

| **Press factor** | **RAW Density** | **Thickness** | **Internal bond** | **Surface soundness** |
|---|---|---|---|---|
| | EN-323 | EN-317 | EN-319 | EN-319 |
| **sec/mm** | **kg/m3** | **% (24h)** | **MPa** | **MPa** |
| **7** | 686 | 16.58% | 0.43 | 1.21 |
| **6** | 681 | 17.44% | 0.39 | 1.18 |
| **5** | 679 | 19.28% | 0.35 | 1.19 |

No pMDI dedicated releasing agents were utilized.

No press built-up was observed utilising the binder composition, as given by table 13, while running continuous production for more than six hours.

The Global Warming Potential of the bio-based binder comprising Jatropha seeds has been estimated in the range of about -10 to -30 kg Co2-eq per m3 of particleboard panel. By comparison the GWP of Melamine-Urea-Formaldehyde binder is in the range of 150 kg CO2-eq per m3 panel (Wilson, 2009).

### Example 5: Particleboard preparation from slurries with the addition of sugars in combination with formaldehyde-free prepolymers.

A particleboard was manufactured according to the described particleboard manufacturing method. For each panel, pMDI was utilised in the core, while for the face layers a commercially available PAE based resin was utilised. The final bio-binder composition comprises PAE dextrose monohydrateand and comminuted soybeans, according to the ratio, as described in table 9 below.

### Table 9:

**Table 9: Binder composition applied to the external face layers of the particleboard.**

| **Component** | **SC** | **PHS** | **Added** | **%** | **%** |
|---|---|---|---|---|---|
| | **(%)** | **#** | **on wet** | **on wet** | **on dry** |
| Comminuted soybeans | 88,0% | 100,0 | 113,6 | 17,09% | 15,04% |
| PAE | 25% | 70,0 | 280,0 | 42,12% | 10,53% |
| Dextrose monohydrate | 91% | 115,0 | 126,4 | 19,01% | 17,30% |
| Water | 0% | | 144,8 | 21,78% | 0,0% |
| **Total:** | | 285 | 664,8 | 100,0% | 42,87% |

The binder obtained was sprayed onto the wood fibres. The dosage percentage represents the amount of binder in the particleboard layer on dry weight upon curing. Upon resination of the fibres, the moisture content was adjusted, when necessary, to 6 % and 12,0 % for the core- and face layer respectively by means of adding water. The binder compositions utilised and their relative dosages onto the wood fibres are given in table 10 below, where BIO represents the dosage of the combined solids coming from the comminuted whole soybeans and dextrose monohydrate.

### Table 10:

**Table 10: resin solid dosage in terms of dry weight of the particleboard to be manufactured.**

| **PANELS** | **CORE** | | **FACE** | | |
|---|---|---|---|---|---|
| | **Dosage** | **pMDI** | **Dosage** | **PAE** | **BIO** |
| **P9** | 2.5% | 2.5% | 7.0% | 1.5% | 5.5% |

It was observed that the resinated fibres for the face layer exhibited a significant amount of cold tack; a cold tack that is comparable to resinated fibres utiling UF resins.

Upon stabilisation of the prepared panel, samples were cut and tested accordingly. Results of these tests are given in Table 11 below.

### Table 11:

**Table 11: PAE based panel performances according to EN-312 testing requirements**

| **Panel** | **RAW Density** | **Thickness swelling** | **Internal bond** | **Surface soundness** |
|---|---|---|---|---|
| | EN-323 | EN-317 | EN-319 | EN-319 |
| **#** | **kg/m3** | **% (24h)** | **MPa** | **MPa** |
| **P10** | 683 | 19,61% | 0.35 | 1.10 |

### Example 6: Industrially prepared particleboard with binder derived from Soybean oilseeds

About 400 kg of *soybeans* were crushed to obtain a flour that was afterwards dispersed with about 550 kg of *J. curcas* oil to obtain a slurry. The slurry had a solid content of about 96 %. The slurry was then dispersed into an aqueous medium being a 15% sugar solution (dextrose monohydrate dissolved into water) such that the final solid content of the slurry was about 45%. Afterwards the slurry was passed through a 15 kW hammer crusher to obtain a homogeneous product. The slurry was then pumped to an in-line dynamic mixer where the slurry was mixed with commercially available pMDI. Dosages utilised for the core and face layers are given in the table 12 below.

### Table 12:

**Table 12: Dosage of pMDI and slurry onto the wood fibres for the core and face layers of a particleboard panel.**

| **CORE** | | | **FACE** | | |
|---|---|---|---|---|---|
| **Dosage** | **pMDI** | **Slurry** | **Dosage** | **pMDI** | **Slurry** |
| 3.0% | 2.0% | 1.0% | 7.0% | 1.5% | 5.5% |

The wood fibres originated from recycled wood material and had a moisture content of 1.5 %. No additional water was added to the core fibres keeping the moisture content of the core layer at about 3.3%, while for the face layers, water was added prior to adding the binder targeting a final moisture content, including the moisture given by the binder utilised, of about 11.5%. Flow-rates were set as such to manufacture particleboards having a density of 680 kg/m3 for which press-factors of 7 and 5 seconds per millimetre were applied. Panel performances of the industrial trial are given in table 13 below.

### Table 13:

**Table 13: Particleboard characteristics according to EN-312 requirement testing procedures at different press-factors.**

| **Press factor** | **RAW Density** | **Thickness swelling** | **Internal bond** | **Surface soundness** |
|---|---|---|---|---|
| | EN-323 | EN-317 | EN-319 | EN-319 |
| **sec/mm** | **kg/m3** | **% (24h)** | **MPa** | **MPa** |
| **7** | 687 | 18.89% | 0.37 | 1.28 |
| **5** | 680 | 21.84% | 0.35 | 1.18 |

No pMDI dedicated releasing agents were utilized.

No press built-up was observed utilising the binder composition, as given by table 13, while running continuous production for more than six hours.

GWP of the bio-based binder utilised for the production of particleboard has been estimated in the range of about 15 to 30 kg CO2-eq per m3 particleboard panel. By comparison the GWP of Melamine-Urea-Formaldehyde binder is in the range of 150 kg CO2-eq per m3 panel.

### Example 7: Particleboard preparation from slurries with UF

A particleboard was manufactured according to the described particleboard manufacturing method. For the panel, a standard E1 emissions class UF binder, having a solid content of 68 %, was utilised in the core- and face layers in combination with Jatropha slurry S2 having a solid content of 42.5%. The utilised dosages onto the core layer and face layer fibres are given in table 14 below:

### Table 14

**Table 14: Dosages onto the wood fibres, in terms of dry weight solids binder onto dry weight solids wood, utilising UF-based reactive prepolymers.**

| **PANELS** | **SLURRY** | **CORE** | | | **FACE** | | |
|---|---|---|---|---|---|---|---|
| | | **Dosage** | **UF** | **Slurry** | **Dosage** | **UF** | **Slurry** |
| **P11** | S2 | 8.0% | 6.5% | 1.5% | 8.0% | 4.0% | 4.0% |

The Jatropha slurry was mixed with the UF binder such that the binder dosed the desired ratio of UF to slurry accordingly when poured onto the fibres. The Jatropha-UF binder for the core layer had a solid content of about 60% and for the face layer, including the addition of water, a solid content of about 45%. No additional water was added onto the wood fibres prior or after the resination step. The panel was pressed utilising a pressfactor of 8 sec/mm and was, after being stabilised, cut into specimen to test the internal bond, surface soundness, and swelling according to standard EN-312 P2 requirements.

Results of these tests are given in Table 15 below.

### Table 15:

**Table 15: UF based panel performances according to EN-312 testing requirements.**

| **Panel** | **RAW Density** | **Thickness swelling** | **Internal bond** | **Surface soundness** |
|---|---|---|---|---|
| | EN-323 | EN-317 | EN-319 | EN-319 |
| **#** | **kg/m3** | **% (24h)** | **MPa** | **MPa** |
| **P11** | 695 | 25.69% | 0.37 | 1.08 |

As it can be noticed, over 30% of UF resin has been substituted by means of unrefined biological material. An advantage of such bio-binder is represented by its reduced emissions and full biodegradability.

From the above description and the above-noted examples, the advantage attained by the product described and obtained according to the present invention are apparent.

### REFERENCES

1. CARB (2007) - Airborne Toxic Control Measure to Reduce Formaldehyde Emissions from Composite Wood Products https://ww3.arb.ca.gov/regact/2007/compwood07/fro-final. pdf?_ga=2.90713882.1082449153.1562761880-1534676479.1562761880
2. EuCIA (2015) - the 6th Adaptation to Technical Progress (ATP) to the classification, labelling and packaging of substances and mixtures (CLP) Regulation on 6thJune 2014 (Regulation 605/2014) https://eucia.eu/userfiles/files/20150107_New%20labelling%20for%20formaldehyd e%20and%20styrene.pdf
3. Plastics Europe (2012) - Eco-profiles and Environmental Product Declarations of the European Plastics Manufactures - Toluene Diisocyanate (TDI) & Methylenediphenyl Diisocyanate (MDI) ISOPA https://www.isopa.org/media/2609/eco-profile-mdi-tdi.pdf
4. Baumert (2014) - Life cycle assessment of carbon and energy balances in Jatropha production systems of Burkina Faso https://d-nb.info/1052652662/34
5. Espy, H.H., "Alkaline-curing polymeric amine-epichlorohydrin resins," in L.L. Chan, Ed.,Wet-Strength Resins and their Application, TAPPI Press, Atlanta, Ch. 2, 13-44 (1994)
6. United Soybean Board (2016) - "Update of Soybean Life Cycle Analysis"
7. Oregon State University, Wilson (2009) - "Life-cycle inventory of formaldehyde-based resins used in wood composites in terms of resources, emissions, energy and carbon"

## Claims

1. A bio-based binder composition comprising:
a. an unrefined biological material;
b. a liquid medium;
c. a reactive prepolymer;
wherein said unrefined biological material is selected from: oilseeds, beans, grains, yeast, larvae, or a combination thereof; and wherein said unrefined biological material comprises one or more of the following features:
i. a fatty acid C=O stretching band of COOH between 1725 cm⁻¹ and 1705 cm⁻¹ that presents an absorbance of at least 0.02;
ii. a prominent triacylglycerol C=O band between 1750 cm⁻¹ and 1740 cm⁻¹ that presents an absorbance of at least 0.06; or
iii. a prominent hydrocarbon chain C-H band between 2950 cm⁻¹ and 2850 cm⁻¹ that presents an absorbance of at least 0.08 and is more prominent than the amide N-H band between 3350 cm⁻¹ and 3250 cm⁻¹;
as determined by solid state Fourier Transform Infrared Spectroscopy - Attenuated Total Reflection (FTIR-ATR).

2. The composition according to claim 1, wherein said unrefined biological material is oilseeds, selected from: jatropha seeds, soybeans, camelina seeds, castor seeds, cottonseeds, flaxseeds, jojoba seeds, mahua seeds, maize germs, neem seeds, pongamia seeds, rapeseeds, sunflower seeds, thistle seeds, or a combination thereof.

3. The composition according to anyone of claims 1 to 2, wherein the unrefined biological material used has been partially or fully dehulled.

4. The composition according to anyone of claims 1 to 3, wherein the binder on dry weight comprises the unrefined biological matter in a range from 1 % to 90 % (w/w).

5. The composition according to anyone of claims 1 to 4, wherein the liquid medium is a lipid, water, or a mixture thereof.

6. The composition according to anyone of claims 1 to 5, wherein the liquid medium is camelina oil, corn oil, rapeseed oil, sunflower oil, jatropha oil, soybean oil, or a combination thereof.

7. The composition according to anyone of claims 1 to 6, wherein the liquid medium is present from 10 % (w/w) to 90 % (w/w) of the liquid binder composition.

8. The composition according to anyone of claims 1 to 7, wherein, the reactive prepolymer is an isocyanate-based prepolymer, a poly(amidoamine)-based prepolymer or an aldehyde-based prepolymer or a mixture thereof.

9. The composition according to anyone of claims 1 to 8, wherein, the reactive prepolymer is chosen from the group consisting of polymeric methylene diphenyl diisocyanate (pMDI), poly(amidoamine)-epichlorohydrin (PAE), an aldehyde-based prepolymer selected from urea-formaldehyde (UF), urea-melamine-formaldehyde (UmF), melamine-urea-formaldehyde (MUF), or a mixture thereof.

10. The composition according to anyone of claims 1 to 9, further comprising a hydroxyfunctional compound selected from glycerine, polysaccharides, oligosaccharides, monosaccharides, or a combination thereof, preferably the hydroxyfunctional compounds are: sugars, preferably dextrose monohydrate or syrups preferably corn syrup having a dextrose content in the range from 1 % to 100% on dry weight.

11. A method for producing a bio-based binder composition comprising the following steps:
a. mixing an unrefined biological material with a liquid medium to obtain a slurry;
b. mixing the slurry of step a. with a reactive prepolymer;
c. obtaining the bio-based binder,
wherein:
- the unrefined biological material is selected from: oilseeds, beans, grains, yeast, larvae, or a combination thereof, and comprises one or more of the following features:
i. a fatty acid C=O stretching band of COOH between 1725 cm⁻¹ and 1705 cm⁻¹ that presents an absorbance of at least 0.02;
ii. a prominent triacylglycerol C=O band between 1750 cm⁻¹ and 1740 cm⁻¹ that presents an absorbance of at least 0.06; or
iii. a prominent hydrocarbon chain C-H band between 2950 cm⁻¹ and 2850 cm⁻¹ that presents an absorbance of at least 0.08 and is more prominent than the amide N-H band between 3350 cm⁻¹ and 3250 cm⁻¹;
as determined by solid state Fourier Transform Infrared Spectroscopy - Attenuated Total Reflection (FTIR-ATR);
- the liquid medium is selected from a lipid, water, or a mixture thereof; and
- the reactive prepolymer is selected from an isocyanate-based prepolymer, a poly(amidoamine)-based prepolymer or an aldehyde-based prepolymer or a mixture thereof;
and wherein a hydroxyfunctional compound selected from glycerine, polysaccharides, oligosaccharides, monosaccharides, or a combination thereof can be optionally added to step a. or step b..

12. The method according to claim 11, wherein the reactive prepolymer, the unrefined biological material and the liquid medium are fed separately to an in-line static, dynamic or combined static and dynamic mixer, prior to spraying the bio-based binder onto a substrate.

13. A method of gluing a first article to at least a second article to obtain a glued product comprising:
a. applying the binder composition according to anyone of claims 1 to 10 to a surface of a first article to obtain a binding surface; and
b. contacting the binding surface of the first article with a surface of at least a second article; and
c. curing the binder.

14. The method according to claim 13, wherein the first and at least second articles are each independently a material chosen from the group consisting of: a lignocellulosic material, a composite material containing a lignocellulosic material, a metal, a ceramic, a polymer, a plastic, a fabric, a glass, or a combination thereof, wherein said lignocellulosic material is preferably wood.

15. A glued product obtainable by the method according to claim 13 or 14, wherein:
a. the first and second articles are selected from the group consisting of a lignocellulosic material, a composite material containing a lignocellulosic material, a ceramic, a polymer, a fibreglass, a wood fibre, a ceramic powder, a plastic, a fabric and a glass, or a combination thereof; and
b. The cured binder has a weight between 1 % and 30% of the dry weight of the product.

## Patentansprüche

1. Biobasierte Bindemittelzusammensetzung, umfassend:
a. ein unraffiniertes biologisches Material;
b. ein flüssiges Medium;
c. ein reaktives Präpolymer;
wobei das unraffinierte biologische Material ausgewählt ist aus: Ölsaaten, Bohnen, Getreide, Hefe, Larven oder einer Kombination davon; und wobei das unraffinierte biologische Material ein oder mehrere der folgenden Merkmale umfasst:
i. eine Fettsäure-C=O-Valenzschwingungsbande von COOH zwischen 1725 cm⁻¹ und 1705 cm⁻¹, die eine Extinktion von mindestens 0,02 aufweist;
ii. eine ausgeprägte Triacylglycerin-C=O-Bande zwischen 1750 cm⁻¹ und 1740 cm⁻¹, die eine Extinktion von mindestens 0,06 aufweist; oder
iii. eine ausgeprägte Kohlenwasserstoffketten-C-H-Bande zwischen 2950 cm⁻¹ und 2850 cm⁻¹, die eine Extinktion von mindestens 0,08 aufweist und ausgeprägter ist als die Amid-N-H-Bande zwischen 3350 cm⁻¹ und 3250 cm⁻¹;
bestimmt durch Festkörper-Fourier-Transformations-Infrarotspektroskopie - abgeschwächte Totalreflexion (FTIR-ATR).

2. Zusammensetzung nach Anspruch 1, wobei das unraffinierte biologische Material Ölsaaten sind, ausgewählt aus: Jatrophasamen, Sojabohnen, Leindottersamen, Rizinussamen, Baumwollsamen, Leinsamen, Jojobasamen, Mahuasamen, Maiskeimen, Neemsamen, Pongamiasamen, Rapssamen, Sonnenblumenkernen, Distelsamen oder einer Kombination davon.

3. Zusammensetzung nach einem der Ansprüche 1 bis 2, wobei das verwendete unraffinierte biologische Material teilweise oder vollständig geschält wurde.

4. Zusammensetzung nach einem der Ansprüche 1 bis 3, wobei das Bindemittel, bezogen auf das Trockengewicht, die unraffinierte biologische Substanz in einem Bereich von 1% bis 90% (Gew./Gew.) umfasst.

5. Zusammensetzung nach einem der Ansprüche 1 bis 4, wobei das flüssige Medium ein Lipid, Wasser oder eine Mischung davon ist.

6. Zusammensetzung nach einem der Ansprüche 1 bis 5, wobei das flüssige Medium Leindotteröl, Maiskeimöl, Rapsöl, Sonnenblumenöl, Jatrophaöl, Sojaöl oder eine Kombination davon ist.

7. Zusammensetzung nach einem der Ansprüche 1 bis 6, wobei das flüssige Medium in einer Menge von 10% (Gew./Gew.) bis 90% (Gew./Gew.) der flüssigen Bindemittelzusammensetzung vorliegt.

8. Zusammensetzung nach einem der Ansprüche 1 bis 7, wobei das reaktive Präpolymer ein Präpolymer auf Isocyanatbasis, ein Präpolymer auf Poly(amidoamin)-Basis oder ein Präpolymer auf Aldehydbasis oder eine Mischung davon ist.

9. Zusammensetzung nach einem der Ansprüche 1 bis 8, wobei das reaktive Präpolymer ausgewählt ist aus der Gruppe, bestehend aus polymerem Methylendiphenyldiisocyanat (pMDI), Poly(amidoamin)-Epichlorhydrin (PAE), einem Präpolymer auf Aldehydbasis, ausgewählt aus Harnstoff-Formaldehyd (UF), Harnstoff-Melamin-Formaldehyd (UmF), Melamin-Harnstoff-Formaldehyd (MUF) oder einer Mischung davon.

10. Zusammensetzung nach einem der Ansprüche 1 bis 9, ferner umfassend eine hydroxyfunktionelle Verbindung, ausgewählt aus Glycerin, Polysacchariden, Oligosacchariden, Monosacchariden oder einer Kombination davon, wobei die hydroxyfunktionellen Verbindungen vorzugsweise sind: Zucker, vorzugsweise Dextrose-Monohydrat, oder Sirupe, vorzugsweise Maissirup mit einem Dextrosegehalt im Bereich von 1% bis 100%, bezogen auf das Trockengewicht.

11. Verfahren zur Herstellung einer biobasierten Bindemittelzusammensetzung, umfassend die folgenden Schritte:
a. Mischen eines unraffinierten biologischen Materials mit einem flüssigen Medium, um eine Aufschlämmung zu erhalten;
b. Mischen der Aufschlämmung aus Schritt a. mit einem reaktiven Präpolymer;
c. Erhalten des biobasierten Bindemittels,
wobei:
- das unraffinierte biologische Material ausgewählt ist aus: Ölsaaten, Bohnen, Getreide, Hefe, Larven oder einer Kombination davon, und ein oder mehrere der folgenden Merkmale umfasst:
i. eine Fettsäure-C=O-Valenzschwingungsbande von COOH zwischen 1725 cm⁻¹ und 1705 cm⁻¹, die eine Extinktion von mindestens 0,02 aufweist;
ii. eine ausgeprägte Triacylglycerin-C=O-Bande zwischen 1750 cm⁻¹ und 1740 cm⁻¹, die eine Extinktion von mindestens 0,06 aufweist; oder
iii. eine ausgeprägte Kohlenwasserstoffketten-C-H-Bande zwischen 2950 cm⁻¹ und 2850 cm⁻¹, die eine Extinktion von mindestens 0,08 aufweist und ausgeprägter ist als die Amid-N-H-Bande zwischen 3350 cm⁻¹ und 3250 cm⁻¹;
bestimmt durch Festkörper-Fourier-Transformations-Infrarotspektroskopie - abgeschwächte Totalreflexion (FTIR-ATR);
- das flüssige Medium ausgewählt ist aus einem Lipid, Wasser oder einer Mischung davon; und
- das reaktive Präpolymer ausgewählt ist aus einem Präpolymer auf Isocyanatbasis, einem Präpolymer auf Poly(amidoamin)-Basis oder einem Präpolymer auf Aldehydbasis oder einer Mischung davon;
und wobei eine hydroxyfunktionelle Verbindung, ausgewählt aus Glycerin, Polysacchariden, Oligosacchariden, Monosacchariden oder einer Kombination davon, gegebenenfalls zu Schritt a. oder Schritt b. zugegeben werden kann.

12. Verfahren nach Anspruch 11, wobei das reaktive Präpolymer, das unraffinierte biologische Material und das flüssige Medium getrennt einem statischen, dynamischen oder kombiniert statischen und dynamischen In-Line-Mischer zugeführt werden, bevor das biobasierte Bindemittel auf ein Substrat gesprüht wird.

13. Verfahren zum Verkleben eines ersten Gegenstands mit mindestens einem zweiten Gegenstand, um ein verklebtes Produkt zu erhalten, umfassend:
a. Aufbringen der Bindemittelzusammensetzung nach einem der Ansprüche 1 bis 10 auf eine Oberfläche eines ersten Gegenstands, um eine Bindeoberfläche zu erhalten; und
b. Inkontaktbringen der Bindeoberfläche des ersten Gegenstands mit einer Oberfläche mindestens eines zweiten Gegenstands; und
c. Aushärten des Bindemittels.

14. Verfahren nach Anspruch 13, wobei der erste und mindestens zweite Gegenstand jeweils unabhängig voneinander ein Material sind, das ausgewählt ist aus der Gruppe, bestehend aus: einem Lignocellulosematerial, einem Verbundwerkstoff, der ein Lignocellulosematerial enthält, einem Metall, einer Keramik, einem Polymer, einem Kunststoff, einem Gewebe, einem Glas oder einer Kombination davon, wobei das Lignocellulosematerial vorzugsweise Holz ist.

15. Verklebtes Produkt, erhältlich durch das Verfahren nach Anspruch 13 oder 14, wobei:
a. der erste und der zweite Gegenstand ausgewählt sind aus der Gruppe, bestehend aus einem Lignocellulosematerial, einem Verbundwerkstoff, der ein Lignocellulosematerial enthält, einer Keramik, einem Polymer, einer Glasfaser, einer Holzfaser, einem Keramikpulver, einem Kunststoff, einem Gewebe und einem Glas oder einer Kombination davon; und
b. das ausgehärtete Bindemittel ein Gewicht zwischen 1% und 30% des Trockengewichts des Produkts aufweist.

## Revendications

1. Composition de liant biosourcé comprenant :
a. une matière biologique non raffinée ;
b. un milieu liquide ;
c. un prépolymère réactif ;
dans laquelle ladite matière biologique non raffinée est choisie parmi : graines oléagineuses, haricots, grains, levure, larves, ou une combinaison de ceux-ci ; et dans laquelle ladite matière biologique non raffinée comprend une ou plusieurs des caractéristiques suivantes :
i. une bande d'élongation C=O d'acide gras de COOH entre 1725 cm⁻¹ et 1705 cm⁻¹ qui présente une absorbance d'au moins 0,02 ;
ii. une bande C=O de triacylglycérol prononcée entre 1750 cm⁻¹ et 1740 cm⁻¹ qui présente une absorbance d'au moins 0,06 ; ou
iii. une bande C-H de chaîne hydrocarbonée prononcée entre 2950 cm⁻¹ et 2850 cm⁻¹ qui présente une absorbance d'au moins 0,08 et est plus prononcée que la bande N-H d'amide entre 3350 cm⁻¹ et 3250 cm⁻¹;
telle que déterminées par Spectroscopie infrarouge à transformée de Fourier à l'état solide - Réflexion totale atténuée (Fourier Transform Infrared Spectroscopy - Attenuated Total Reflection, FTIR-ATR).

2. Composition selon la revendication 1, dans laquelle ladite matière biologique non raffinée est constituée de graines oléagineuses, choisies parmi : graines de jatropha, fèves de soja, graines de caméline, graines de ricin, graines de coton, graines de lin, graines de jojoba, graines de mahua, germes de maïs, graines de neem, graines de pongamia, graines de colza, graines de tournesol, graines de chardon, ou une combinaison de celles-ci.

3. Composition selon l'une quelconque des revendications 1 à 2, dans laquelle la matière biologique non raffinée utilisée a été partiellement ou totalement décortiquée.

4. Composition selon l'une quelconque des revendications 1 à 3, dans laquelle le liant comprend, en poids sec, la matière biologique non raffinée dans une plage allant de 1 % à 90 % (p/p).

5. Composition selon l'une quelconque des revendications 1 à 4, dans laquelle le milieu liquide est un lipide, de l'eau, ou un mélange de ceux-ci.

6. Composition selon l'une quelconque des revendications 1 à 5, dans laquelle le milieu liquide est huile de caméline, huile de maïs, huile de colza, huile de tournesol, huile de jatropha, huile de soja, ou une combinaison de celles-ci.

7. Composition selon l'une quelconque des revendications 1 à 6, dans laquelle le milieu liquide est présent à raison de 10 % (p/p) à 90 % (p/p) de la composition de liant liquide.

8. Composition selon l'une quelconque des revendications 1 à 7, dans laquelle le prépolymère réactif est un prépolymère à base d'isocyanate, un prépolymère à base de poly(amidoamine) ou un prépolymère à base d'aldéhyde, ou un mélange de ceux-ci.

9. Composition selon l'une quelconque des revendications 1 à 8, dans laquelle le prépolymère réactif est choisi dans le groupe constitué par diisocyanate de diphénylméthane polymérique (pMDI), poly(amidoamine)-épichlorhydrine (PAE), un prépolymère à base d'aldéhyde choisi parmi urée-formaldéhyde (UF), urée-mélamine-formaldéhyde (UmF), mélamine-urée-formaldéhyde (MUF), ou un mélange de ceux-ci.

10. Composition selon l'une quelconque des revendications 1 à 9, comprenant en outre un composé à fonctionnalité hydroxy choisi parmi glycérine, polysaccharides, oligosaccharides, monosaccharides, ou une combinaison de ceux-ci, de préférence les composés à fonctionnalité hydroxy sont : des sucres, de préférence le dextrose monohydraté, ou des sirops, de préférence le sirop de maïs ayant une teneur en dextrose dans la plage allant de 1 % à 100 % en poids sec.

11. Procédé de production d'une composition de liant biosourcé comprenant les étapes suivantes :
a. le mélange d'une matière biologique non raffinée avec un milieu liquide pour obtenir une suspension ;
b. le mélange de la suspension de l'étape a. avec un prépolymère réactif ;
c. l'obtention du liant biosourcé,
dans lequel :
- la matière biologique non raffinée est choisie parmi : graines oléagineuses, haricots, grains, levure, larves, ou une combinaison de ceux-ci, et comprend une ou plusieurs des caractéristiques suivantes :
i. une bande d'élongation C=O d'acide gras de COOH entre 1725 cm⁻¹ et 1705 cm⁻¹ qui présente une absorbance d'au moins 0,02 ;
ii. une bande C=O de triacylglycérol prononcée entre 1750 cm⁻¹ et 1740 cm⁻¹ qui présente une absorbance d'au moins 0,06 ; ou
iii. une bande C-H de chaîne hydrocarbonée prononcée entre 2950 cm⁻¹ et 2850 cm⁻¹ qui présente une absorbance d'au moins 0,08 et est plus prononcée que la bande N-H d'amide entre 3350 cm⁻¹ et 3250 cm⁻¹;
telle que déterminées par Spectroscopie infrarouge à transformée de Fourier à l'état solide - Réflexion totale atténuée (FTIR-ATR) ;
- le milieu liquide est choisi parmi un lipide, de l'eau, ou un mélange de ceux-ci ; et
- le prépolymère réactif est choisi parmi un prépolymère à base d'isocyanate, un prépolymère à base de poly(amidoamine) ou un prépolymère à base d'aldéhyde, ou un mélange de ceux-ci ;
et dans lequel un composé à fonctionnalité hydroxy choisi parmi glycérine, polysaccharides, oligosaccharides, monosaccharides, ou une combinaison de ceux-ci peut éventuellement être ajouté à l'étape a. ou à l'étape b.

12. Procédé selon la revendication 11, dans lequel le prépolymère réactif, la matière biologique non raffinée et le milieu liquide sont introduits séparément dans un mélangeur en ligne statique, dynamique ou combiné statique et dynamique, avant la pulvérisation du liant biosourcé sur un substrat.

13. Procédé de collage d'un premier article sur au moins un deuxième article pour obtenir un produit collé, comprenant :
a. l'application de la composition de liant selon l'une quelconque des revendications 1 à 10 sur une surface d'un premier article pour obtenir une surface de liaison ; et
b. la mise en contact de la surface de liaison du premier article avec une surface d'au moins un deuxième article ; et
c. le durcissement du liant.

14. Procédé selon la revendication 13, dans lequel le premier et l'au moins un deuxième article sont chacun indépendamment un matériau choisi dans le groupe constitué par : un matériau lignocellulosique, un matériau composite contenant un matériau lignocellulosique, un métal, une céramique, un polymère, une matière plastique, un tissu, un verre, ou une combinaison de ceux-ci, dans lequel ledit matériau lignocellulosique est de préférence du bois.

15. Produit collé obtenable par le procédé selon la revendication 13 ou 14, dans lequel :
a. les premier et deuxième articles sont choisis dans le groupe constitué par un matériau lignocellulosique, un matériau composite contenant un matériau lignocellulosique, une céramique, un polymère, une fibre de verre, une fibre de bois, une poudre céramique, une matière plastique, un tissu et un verre, ou une combinaison de ceux-ci ; et
b. le liant durci a un poids entre 1 % et 30 % du poids sec du produit.
